# DEMANDE DE BREVET EUROPEEN

(11) **EP 3 764 286 A1**
(43) Date de publication de la demande: **13.01.2021**
(21) Numéro de dépôt: 19290051.2
(22) Date de dépôt: 10.07.2019
(51) Int. Cl.: G06N 3/04, G06N 3/063, G06N 3/08

(54) **PROCÉDÉ ET OUTIL INFORMATIQUE DE DÉTERMINATION DE FONCTIONS DE TRANSFERTS ENTRE DES PAIRES DE COUCHES SUCCESSIVES D'UN RÉSEAU DE NEURONES**

(71) Demandeur: STMicroelectronics (Rousset) SAS, 13790 Rousset (FR); STMicroelectronics S.r.l., Agrate Brianza (IT)
(72) Inventeur: FOLLIOT, Laurent, 06620 Gourdon (FR); DEMAJ, Pierre, 06200 Nice (FR); PLEBANI, Emanuele, 24039 Sotto IL Monte Giovanni XXIII (IT)
(74) Mandataire: Casalonga

(57) **Abrégé**

Procédé, comprenant préalablement à une mise en œuvre d'un réseau de neurones par une unité de traitement (UT), le réseau de neurones comportant une succession de couches (LYₖ) et au moins un opérateur (OPₖ) intervenant entre au moins une paire de couches successives (LYₖ, LYₖ₊₁),
une génération par un outil informatique (ORD), d'un code exécutable (CX) destiné à être exécuté par l'unité de traitement pour mettre en œuvre le réseau de neurones, et
une élaboration par l'outil informatique (ORD) d'au moins
une fonction de transfert entre ladite au moins une paire de couches sous la forme d'un ensemble de valeurs pré-calculées (TF).

## Description

Des modes de mises en œuvre et de réalisation de l'invention concernent les réseaux de neurones, particulièrement mais non exclusivement les réseaux de neurones profonds (« Deep Neural Nteworks »), et notamment la détermination de fonctions de transfert entre des paires de couches successives du réseau de neurones faisant intervenir un ou plusieurs opérateurs.

Les réseaux de neurones sont massivement utilisés pour résoudre divers problèmes statistiques, notamment le problème de la classification de données.

Après une phase d'apprentissage automatique généralement supervisée, c'est-à-dire sur une base de données de référence déjà classifiée, un réseau de neurones « apprend » et devient seul capable d'appliquer la même classification à des données inconnues.

On peut citer les réseaux de neurones à convolution ou CNN (« Convolutional Neural Networks ») qui représentent un type de réseaux de neurones dans lequel le motif de connexion entre deux neurones est inspiré par le cortex visuel des animaux. De tels réseaux de neurones permettent avec efficacité la reconnaissance d'objets ou de personnes dans des images ou des vidéos.

L'architecture d'un réseau de neurones comprend généralement une succession de couches dont chacune prend ses entrées sur les sorties de la couche précédente.

Les réseaux de neurones profonds tendent à être de plus en plus complexes et de plus en plus d'utilisateurs cherchent à en quantifier les données d'entrée et de sortie de chaque couche afin d'améliorer la vitesse de traitement et de réduire la taille mémoire nécessaire au stockage de ces données.

Par exemple, les données de sortie et les données d'entrée de chaque couche peuvent être quantifiées sur huit ou seize bits mais avec des formats de quantification identiques ou différents.

En effet, toutes les couches peuvent ne pas être quantifiées avec la même précision et avoir la même plage de valeurs, ces paramètres dépendant en particulier de la plage dynamique des données de sortie des couches.

Dans un réseau de neurones, les données d'entrée sont multipliées par au moins un poids d'une valeur donnée pour chaque couche.

Par « poids », qui est un terme dont la signification dans le domaine des réseaux de neurones est bien connue de l'homme du métier, on entend des paramètres de neurones configurables pour obtenir de bonnes données de sortie.

Ces poids sont déterminés en entrée dans le réseau de neurones sur une base de données d'entraînement. Plus précisément, le réseau de neurones traite par exemple une image extraite de ladite base de données et en sortie il fait une prédiction, c'est-à-dire détermine à quelle classe l'image pourrait appartenir sachant que la classe de l'image est préalablement connue.

En fonction de la véracité de ce résultat, on met à jour tous les poids du réseau de neurones selon par exemple un algorithme qui s'appelle la rétro-propagation du gradient.

Là encore, les poids de chaque couche peuvent, notamment pour des raisons d'optimisation de mémoire, être représentés sur seize ou huit bits.

Des exemples de schémas de quantification sont bien connus de l'homme du métier.

Des informations sur ces schémas de quantification peuvent être trouvés notamment :
dans l'article de Benoit Jacob et autres intitulé « Quantization and Training of Neural Networks for Efficient Integer-Arithmetic-Only Inference » arXiv :1712.05877v1 [cs.LG] 15 Dec 2017, Google Inc. (https://arxiv.org/pdf/1712.05877.pdf), ou encore
dans l'article de Raghuraman Krishnamoorthi intitulé « Quantizing deep convolutional networds for efficient inference : A whitepaper », arXiv :1806.08342v1 [cs.LG] 21 Jun 2018, Google (https://arxiv.org/pdf/1806.08342.pdf).

Par ailleurs, le plus souvent, il est prévu un ou plusieurs opérateurs intervenant à la sortie d'une couche. Un tel opérateur peut être de tout type et le plus souvent non linéaire. Il peut être également un opérateur du type ONNX.

On rappelle que ONNX (Open Neural Network Exchange) désigne une plateforme d'échange de réseaux de neurones qui fournit en particulier une définition d'un modèle de graphe de calcul extensible ainsi que des définitions d'opérateurs intégrés et de types de données standards.

Ce type d'opérateur ONNX est bien connu de l'homme du métier et celui-ci pourra par exemple se référer au document disponible à partir du lien internet suivant :
https://github.com/onnx/onnx/blob/master/docs/Operators.md

Les approches classiques pour déterminer une fonction de transfert entre deux couches faisant intervenir un ou plusieurs opérateurs sont peu efficaces.

En effet, elles requièrent tout d'abord de convertir chaque donnée quantifiée de la couche de sortie de la première couche en des données exprimées en virgule flottante puis d'implémenter une approximation de l'opérateur en virgule flottants en utilisant par exemple des séries et d'appliquer ceci à chaque donnée de sortie de la première couche et finalement de re-quantifier le résultat dans le format de quantification approprié pour fournir les données d'entrée quantifiées de la couche suivante.

Ceci est effectué en temps réel par le processeur qui exécute le réseau de neurones et ceci n'est absolument pas efficace en termes de temps de calcul et de mémoire.

Il existe par conséquent un besoin d'apporter une solution satisfaisante à ce problème.

Selon un mode de mise en œuvre et de réalisation, il est proposé un procédé et un outil informatique capable de déterminer de telles fonctions de transfert d'une façon qui soit efficace en termes de mémoire, de temps de calcul tout en offrant une perte minimale de performance pour le réseau de neurones considéré.

Selon un mode de mise en œuvre et de réalisation, il est proposé non pas de calculer la ou les fonctions de transfert en temps réel lors le mise en œuvre du réseau de neurones, mais de pré-calculer les valeurs de cette ou de ces fonctions de transfert, par exemple sous la forme d'une ou de plusieurs tables, c'est-à-dire de calculer ces valeurs, avantageusement pendant ou après la phase d'entraînement du réseau de neurones, avant sa mise en œuvre par une unité de traitement, par exemple un microprocesseur, d'un appareil, par exemple un téléphone mobile cellulaire du type « smartphone » ou encore une tablette, sans que ces exemples ne soient limitatifs.

Selon un aspect, il est proposé un procédé comprenant, préalablement une mise en œuvre d'un réseau de neurones par une unité de traitement, par exemple un microprocesseur d'un appareil tel qu'un téléphone mobile cellulaire, le réseau de neurones comportant une succession de couches et au moins un opérateur intervenant entre au moins une paire de couches successives,
une génération par un outil informatique, par exemple un ordinateur portable du type PC, d'un code exécutable destiné à être exécuté par l'unité de traitement pour mettre en œuvre le réseau de neurones, et
une élaboration par l'outil informatique d'au moins une fonction de transfert entre ladite au moins une paire de couches sous la forme d'un ensemble de valeurs pré-calculées.

Ces valeurs sont pré-calculées en ce sens qu'elles sont calculées avant la mise en œuvre du réseau de neurones par l'unité de traitement. De ce fait, lors de la mise en œuvre du réseau de neurones, c'est-à-dire lors de l'exécution par l'unité de traitement du code exécutable, la ou les fonctions de transfert n'auront plus besoin d'être calculées en temps réel. Il suffira tout simplement d'extraire les valeurs correspondantes de l'ensemble des valeurs pré-calculées.

En général les données de sortie de la première couche de ladite paire de couches sont avantageusement quantifiées selon un premier schéma de quantification et les données d'entrée de la deuxième couche de ladite paire sont avantageusement quantifiées selon un deuxième schéma de quantification.

Les deux schémas de quantification peuvent être identiques ou différents.

De même le nombre de bits des données d'entrée quantifiées et le nombre de bits des données de sortie quantifiées peuvent être identiques ou différents.

La fonction de transfert prend en compte les premier et deuxième schémas de quantification, ainsi que ledit au moins un opérateur.

D'une façon générale, l'opérateur peut être une fonction (ou « activation » selon un terme bien connu par l'homme du métier dans le domaine des réseaux de neurones) quelconque.

L'opérateur peut ainsi être par exemple l'opérateur « identité » (OP(x)=x). Dans ce cas la fonction de transfert s'apparente comme étant simplement une fonction de conversion permettant de convertir des données quantifiées selon un premier schéma de quantification en des données quantifiées selon un deuxième schéma de quantification.

Selon un mode de mise en œuvre, ladite au moins une fonction de transfert est destinée, lors de la mise en œuvre du réseau de neurones, à recevoir de la première couche de ladite paire des données de sortie quantifiées, à faire intervenir ledit au moins un opérateur et à délivrer à la deuxième couche de ladite paire des données d'entrée quantifiées.

L'élaboration de ladite au moins une fonction de transfert comporte
- pour chaque valeur possible quantifiée desdites données de sortie, une application d'une première fonction de quantification inverse permettant de transformer la valeur quantifiée en une valeur en virgule flottante, une application dudit au moins un opérateur sur ladite valeur en virgule flottante de façon à obtenir une valeur intermédiaire en virgule flottante, et une application d'une deuxième fonction de quantification sur ladite valeur intermédiaire de façon à délivrer la valeur correspondante quantifiée de la donnée d'entrée, et
- une élaboration d'une table de correspondance formant ledit ensemble de valeurs et contenant pour toutes les valeurs possibles des données de sortie quantifiées, toutes les valeurs possibles correspondantes des données d'entrée quantifiées.

Il est possible d'utiliser tout type d'opérateurs, par exemple des opérateurs à plusieurs entrées et plusieurs sorties.

Cependant, il est préférable dans ce cas de limiter le nombre de bits sur lesquels les données d'entrée et de sortie sont quantifiées de façon à limiter la taille de la table de correspondance et donc la taille-mémoire nécessaire à son stockage ultérieur dans l'appareil destiné à mettre en œuvre le réseau de neurones.

C'est la raison pour laquelle il est préférable d'utiliser pour ledit au moins un opérateur, un opérateur point à point c'est-à-dire ayant une entrée et une sortie. Ainsi, le nombre de bits sur lesquels sont quantifiés les données d'entrée et de sortie peut être quelconque, par exemple huit ou seize bits.

Selon un mode de mise en œuvre dans lequel le réseau de neurones comporte au moins un opérateur intervenant entre P paires de couches successives, l'élaboration des P fonctions de transfert respectives entre les P paires de couches comprend une élaboration d'au plus P ensemble de valeurs.

En effet, il est possible lors du pré-calcul des ensembles de valeurs représentatifs des P fonctions de transfert, qu'un même ensemble de valeurs puisse être utilisé pour deux fonctions de transfert entre deux paires de couches différentes.

Généralement, il est prévu une phase d'entrainement du réseau de neurones et l'élaboration de ladite au moins une fonction de transfert est avantageusement effectuée pendant ou après la phase d'entrainement ce qui permet d'ajuster les valeurs de l'ensemble des valeurs pré-calculées en fonction notamment des valeurs des poids du réseau de neurones ayant été optimisées pendant la phase d'entraînement.

Selon un autre aspect, il est proposé un outil informatique configuré pour mettre en œuvre le procédé précédemment défini.

Selon un autre aspect, il est proposé un procédé de mise en œuvre d'un réseau de neurones par une unité de traitement, le réseau de neurones comportant une succession de couches et au moins un opérateur intervenant entre au moins une paire de couches successives.

Ce procédé de mise en œuvre comprend
- un stockage dans des moyens de mémoire, d'un code exécutable permettant la mise en œuvre du réseau de neurones et d'un ensemble de valeurs représentatives d'au moins une fonction de transfert entre ladite au moins une paire de couches,
- une exécution du code exécutable par ladite unité de traitement, cette exécution comportant, pour la détermination de ladite fonction de transfert, une extraction des valeurs dudit ensemble de valeurs stockées en correspondant aux valeurs des données de sortie quantifiées de la première couche de ladite au moins une paire de couches, lesdites valeurs extraites étant les données d'entrée quantifiées de la deuxième couche de ladite paire.

Selon un mode de mise en œuvre, ledit ensemble de valeurs est stocké sous la forme d'une table de correspondance représentative de ladite au moins une fonction de transfert entre ladite au moins une paire de couches, cette fonction de transfert étant destinée lors de la mise en oeuvre du réseau de neurones, à recevoir de la première couche de ladite paire les données de sortie quantifiées, à faire intervenir ledit au moins un opérateur et à délivrer à la deuxième couche de ladite paire les données d'entrée quantifiées, ladite au moins une table de correspondance contenant pour toutes les valeurs possibles des données de sortie quantifiées, toutes les valeurs possibles correspondantes des données d'entrées quantifiées.

Ledit au moins un opérateur est par exemple un opérateur point à point.

Lorsque le réseau de neurones comporte au moins un opérateur intervenant entre P paires de couches successives, on stocke par exemple dans les moyens de mémoire au plus P ensembles de valeurs représentatifs des P fonctions de transfert entre les P paires de couches.

Selon un autre aspect, il est proposé un appareil configuré pour mettre en œuvre le procédé de mise en œuvre précédemment défini.

Selon un autre aspect, il est proposé un outil informatique comprenant des moyens de génération configurés pour, préalablement à une mise en œuvre d'un réseau de neurones par une unité de traitement, le réseau de neurones comportant une succession de couches et au moins un opérateur intervenant entre au moins une paire de couches successives,
générer un code exécutable destiné à être exécuté par l'unité de traitement pour mettre en œuvre le réseau de neurones, et
élaborer au moins une fonction de transfert entre ladite au moins une paire de couches sous la forme d'un ensemble de valeurs pré-calculées.

Selon un mode de réalisation, ladite au moins une fonction de transfert étant destinée lors de la mise en œuvre du réseau de neurones, à recevoir de la première couche de ladite paire des données de sortie quantifiées, à faire intervenir ledit au moins un opérateur et à délivrer à la deuxième couche de ladite paire des données d'entrée quantifiées,

les moyens de génération sont configurés pour, aux fins de l'élaboration de ladite au moins une fonction de transfert,
pour chaque valeur possible quantifiée desdites données de sortie, appliquer une première fonction de quantification inverse permettant de transformer la valeur quantifiée en une valeur en virgule flottante, appliquer ledit au moins un opérateur sur ladite valeur en virgule flottante de façon à obtenir une valeur intermédiaire en virgule flottante, et appliquer une deuxième fonction de quantification sur ladite valeur intermédiaire de façon à délivrer la valeur correspondante quantifiée de la donnée d'entrée, et
élaborer une table de correspondance contenant pour toutes les valeurs possibles des données de sortie quantifiées, toutes les valeurs possibles correspondantes des données d'entrées quantifiées.

Selon un mode de réalisation, ledit au moins un opérateur est un opérateur point à point.

Selon un mode de réalisation, il est proposé un outil informatique dans lequel le réseau de neurones comporte au moins un opérateur intervenant entre P paires de couches successives, et les moyens de génération sont configurés pour élaborer les P fonctions de transferts respectives entre les P paires de couches en élaborant au plus P tables de correspondance.

Selon un mode de réalisation, l'outil informatique est configuré pour effectuer une phase d'entrainement du réseau de neurones, et les moyens de génération sont configurés pour élaborer ladite au moins une fonction de transfert pendant ou après la phase d'entraînement.

Selon un mode de réalisation, l'outil informatique peut comprendre un microprocesseur ou un microcontrôleur incorporant les moyens de génération.

Selon un autre aspect, il est proposé un appareil, comportant
une unité de traitement configurée pour mettre en œuvre un réseau de neurones numérique, le réseau de neurones comportant une successions de couches et au moins un opérateur intervenant entre au moins une paire de couches successives,
des moyens de mémoire configurés pour stocker un code exécutable permettant la mise en œuvre du réseau de neurones et au moins un ensemble de valeurs représentatives d'au moins une fonction de transfert entre ladite au moins une paire de couches,
l'unité de traitement étant configurée pour exécuter le code exécutable, cette exécution comportant, pour la détermination de ladite au moins une fonction de transfert, une extraction des valeurs dudit au moins un ensemble de valeurs stockées en correspondant aux valeurs des données de sortie quantifiées de la première couche de ladite au moins une paire de couches, lesdites valeurs extraites étant les données d'entrée quantifiées de la deuxième couche de ladite paire.

Selon un mode de réalisation, ledit au moins un ensemble de valeurs est stocké sous la forme d'au moins une table de correspondance représentative de ladite au moins une fonction de transfert entre ladite au moins une paire de couches et destinée lors de la mise en œuvre du réseau de neurones, à recevoir de la première couche de ladite paire les données de sortie quantifiées, à faire intervenir ledit au moins un opérateur et à délivrer à la deuxième couche de ladite paire les données d'entrée quantifiées, ladite au moins une table de correspondance contenant pour toutes les valeurs possibles des données de sortie quantifiées, toutes les valeurs possibles correspondantes des données d'entrées quantifiées.

Selon un mode de réalisation, ledit au moins un opérateur est un opérateur point à point.

Selon un mode de réalisation, dans lequel le réseau de neurones comporte au moins un opérateur intervenant entre P paires de couches successives, les moyens de mémoire sont configurés pour stocker au plus P ensembles de valeurs représentatives des P fonctions de transfert entre les P paires de couches.

Selon un mode de réalisation, l'unité de traitement peut comprendre un microprocesseur ou bien un accélérateur matériel.

D'autres avantages et caractéristiques de l'invention apparaîtront à la lecture de la description détaillée de modes de mise en œuvre et de réalisation, nullement limitatifs, et des dessins annexés sur lesquels :

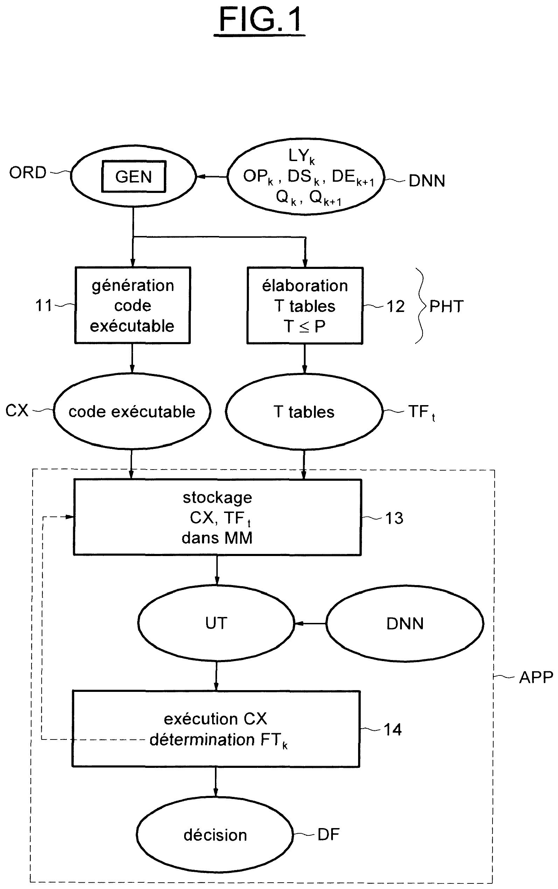

Les figures 1 à 3 ont trait à des modes de mise en œuvre et de réalisation de l'invention.

Sur la figure 1, la référence ORD désigne un outil informatique, par exemple un ordinateur portable du type PC, comportant un microprocesseur ou un microcontrôleur.

Le microprocesseur de l'outil ORD incorpore de façon logicielle des moyens de génération GEN qui vont notamment générer (étape 11) un code exécutable représentatif d'un réseau de neurones DNN, en particulier un réseau de neurones profond.

Comme illustré sur la figure 1 de façon schématique, ce réseau de neurones DNN comporte une succession de couches dont une couche courante est référencée LYₖ.

La référence DSₖ désigne les données de sortie quantifiées de la couche LYₖ.

La référence DEₖ₊₁ désigne les données d'entrée quantifiées de la couche suivante LYₖ₊₁ de rang k+1.

La référence OPₖ désigne un opérateur intervenant entre ici la couche LYₖ et la couche suivante LYₖ₊₁.

La référence Qₖ désigne le schéma de quantification des données de sortie DSₖ et la référence Qₖ₊₁ désigne le schéma de quantification des données d'entrée DEₖ₊₁.

Les schémas de quantification Qₖ et Qₖ₊₁ peuvent être identiques ou différents en fonction notamment de la précision souhaitée pour les données correspondantes.

En présence d'un opérateur entre deux couches successives du réseau de neurones, il convient de déterminer la fonction de transfert qui va recevoir de la première couche de la paire de couches successives, ici la couche LYₖ, les données de sortie quantifiées, qui va faire intervenir l'opérateur OPₖ et qui va délivrer à la deuxième couche de la paire de couches ici la couche LYₖ₊₁, les données d'entrée quantifiées.

Et, selon l'invention, cette fonction de transfert va être élaborée sous la forme d'une table TF de valeurs pré-calculées.

Cette élaboration 12 est effectuée également par les moyens de génération et elle est avantageusement effectuée pendant ou après la phase d'entraînement PHT du réseau de neurones de façon à prendre en compte les valeurs finalisées des poids du réseau de neurones.

En général, il y a une table de correspondance TF par fonction de transfert entre deux couches.

Cela étant, il est possible, lorsque par exemple P opérateurs interviennent entre P paires de couches du réseau de neurones, que plusieurs des tables de correspondance pré-calculées soient identiques pour certaines desdites paires de couches.

En d'autres termes, comme illustré sur la figure 1, les moyens de génération, dans l'hypothèse où un ou plusieurs opérateurs opèrent entre P paires de couches du réseau de neurones, vont élaborer T tables de correspondance avec T inférieur ou égal à P.

L'outil informatique ORD va donc délivrer d'une part un code exécutable CX et T tables de correspondance TFₜ avec t variant de 1 à T.

Pour la mise en œuvre du réseau de neurones au sein d'un appareil APP, par exemple un téléphone mobile du type smartphone, ou bien une tablette sans que ces exemples ne soient limitatifs, équipé d'une unité de traitement UT, par exemple un microprocesseur ou bien un accélérateur matériel, on stocke (étape 13) dans des moyens de mémoire MM le code exécutable CX et les différentes tables de correspondance TFt.

Les moyens de mémoire peuvent comporter une ou plusieurs mémoires. Dans ce dernier cas, le code exécutable CX peut être stocké dans une première mémoire tandis que les tables de correspondance TFt peuvent être stockées dans une autre mémoire.

L'unité de traitement UT met en œuvre alors le réseau de neurones DNN qui lui est fourni avec des données d'entrées quelconques, en exécutant d'une part le code exécutable CX et en déterminant d'autre part les différentes fonctions de transfert FTₖ (étape 14).

Et, comme illustré schématiquement par la flèche en pointillés sur la figure 1, la détermination de ces différentes fonctions de transfert FTk n'est pas effectuée par des calculs en temps réel mais par des extractions de valeurs pré-calculées des tables de correspondance correspondantes TFₜ en fonction des valeurs des données de sortie de la première couche de la paire de couches correspondante.

Ceci sera expliqué plus en détail ci-après.

La mise en œuvre du réseau de neurones DNN permet in fine d'obtenir par exemple une décision DF, par exemple une décision de classification.

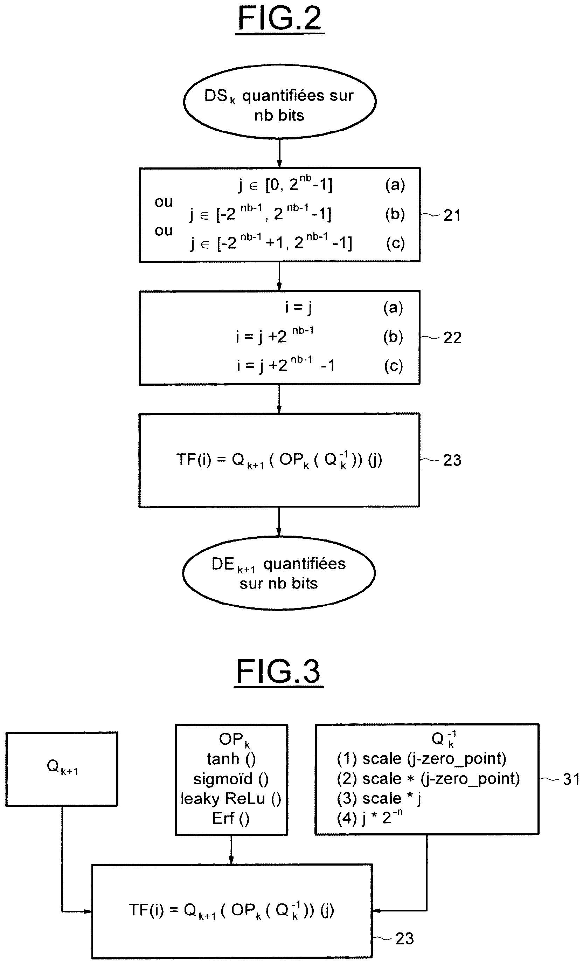

On se réfère maintenant plus particulièrement aux figures 2 et 3 pour décrire plus en détail des exemples d'élaboration d'une table de correspondance TF.

On suppose, à des fins de simplification, qu'il n'y a qu'un seul opérateur OPₖ intervenant entre les deux couches successives LYₖ et LYₖ₊₁.

D'une façon générale, l'élaboration de la fonction de transfert entre ces deux couches comporte pour chaque valeur possible quantifiée des données de sortie DSk,
- une application de la première fonction de quantification inverse Qₖ⁻¹ permettant de transformer la valeur quantifiée selon un schéma de quantification donné, en une valeur en virgule flottante
- une application de l'opérateur OPk sur ladite valeur en virgule flottante de façon à obtenir une valeur intermédiaire en virgule flottante, et
- une application d'une deuxième fonction de quantification Qₖ₊₁ sur la valeur intermédiaire de façon à délivrer la valeur correspondante quantifiée (selon le même ou un autre schéma de quantification) de la donnée d'entrée DEₖ₊₁.

Et la table de correspondance TFᵢ est élaborée (étape 23) et contient pour toutes les valeurs possibles des données de sortie quantifiées, toutes les valeurs possibles des données d'entrée quantifiées.

Par ailleurs, ces valeurs pré-calculées prennent en compte le schéma de quantification des données de sortie de la couche LYₖ ainsi que le schéma de quantification des données d'entrée de la couche LYₖ₊₁.

Comme illustré sur la figure 2, pour élaborer cette table de correspondance, on définit tout d'abord un indice j qui représente les valeurs quantifiées des données de sortie DSₖ.

Ces valeurs quantifiées sont quantifiées sur nb bits, par exemple sur 8 bits.

Comme illustré dans le cadre 21 de la figure 2, pour une quantification non signée (a), j varie entre 0 et 2^{nb-1}.

Pour une quantification signée (b), j varie entre -2^{nb-1} et 2^{nb-1} -1.

Pour une quantification signée avec une plage symétrique (c), j varie entre - 2^{nb-1} +1 et 2^{nb-1} -1.

Par exemple, lorsque l'on a une quantification sur 8 bits (nb = 8), j peut prendre dans le cas (a), toutes les valeurs comprises entre 0 et 255 en notation décimale.

On définit alors l'indice i de la table de correspondance TF (cadre 22 de la figure 2).

Dans le cas (a), i est égal à j.

Dans le cas (b), i est égal à j+2^{nb-1}.

Dans le cas (c), i est égal à j+2^{nb-1} -1.

D'une façon générale, i est égal à j - minR ou minR désigne le minimum de la plage de valeurs quantifiées de j.

Et, i varie entre 0 et 2^{nb} -1.

Ainsi, pour une quantification sur 8 bits, on obtient 256 valeurs pour la table de correspondance TF. Et les différentes valeurs TF(i) de cette table de correspondance correspondent aux valeurs quantifiées des données d'entrée DEₖ₊₁ de la couche LYₖ₊₁ correspondant respectivement aux valeurs j des données de sortie quantifiées DSₖ de la couche LYₖ.

Ainsi, lors de la mise en œuvre du réseau de neurones, pour une valeur donnée quantifiée d'une donnée de sortie de la couche LYₖ, donc pour une valeur donnée de j, on obtiendra directement dans la table à l'indice i correspondant, la valeur quantifiée correspondante de la donnée d'entrée DEₖ₊₁, cette donnée d'entrée étant quantifié selon le bon schéma de quantification et résultant de l'application de l'opérateur OPk sur la donnée de sortie correspondante de la couche précédente.

Et, lorsque l'on a pour une couche donnée, un groupe de données de sortie, on obtient un groupe de données d'entrée pour la couche suivante en extrayant pour chaque donnée de sortie dudit groupe, la valeur correspondante de la donnée d'entrée dans la table de correspondance TF.

La figure 3 illustre différents schémas possibles de quantification et différentes possibilités d'opérateurs qui sont avantageusement des opérateurs point à point c'est-à-dire qui ne modifient pas la dimension du tenseur sur lequel ces opérateurs sont appliqués.

En ce qui concerne les opérateurs OPₖ on peut citer par exemple la tangente hyperbolique, la fonction sigmoïd, l'opérateur leakyReLu et l'opérateur Erf. Tous ces opérateurs sont bien connus de l'homme du métier et sont par exemple détaillés dans le document ONNX précité disponible en utilisant le lien internet :
https://github.com/onnx/onnx/blob/master/docs/Operators.md.

En ce qui concerne l'opération de quantification inverse Q⁻¹ₖ, c'est-à-dire l'opération qui transforme une valeur quantifiée en une valeur en virgule flottante, on peut par exemple utiliser, comme illustré dans le cadre 31 de la figure 3, une quantification affine uniforme (1) dans laquelle le paramètre « scale » définit la taille du pas de quantification et le paramètre « zero_point » est un décalage (« offset ») entre le zéro réel et le zéro des valeurs quantifiées.

On peut également prévoir une quantification asymétrique (2) ou symétrique (3) ou une quantification du type fixe Qmn (4).

Tous ces exemples ne sont pas limitatifs, sont bien connus de l'homme du métier et celui-ci pourra se référer à toutes fins utiles pour plus de détails, aux articles de Krishnamoorthi et Jacob précités.

La fonction Qₖ₊₁ peut être un schéma de quantification inverse de l'un des schémas de quantification (1) à (4) mentionnés dans le cadre 31 de la figure 3.

Bien entendu, l'invention n'est pas limitée aux modes de mise en œuvre et de réalisation qui viennent d'être décrits mais en embrasse toutes les variantes.

Ainsi, il est possible que plusieurs opérateurs interviennent entre deux couches successives du réseau de neurones.

Dans ce cas, la table de correspondance de la fonction de transfert va faire intervenir ces différents opérateurs de transfert par des applications successives en cascade de ces opérateurs sur l'indice j.

Par ailleurs la présente invention peut être par exemple avantageusement utilisée en combinaison avec l'invention décrite dans la demande de brevet français déposée sous le numéro 1902855.

## Revendications

1. Procédé, comprenant préalablement à une mise en œuvre d'un réseau de neurones par une unité de traitement (UT), le réseau de neurones comportant une succession de couches (LYₖ) et au moins un opérateur (OPₖ) intervenant entre au moins une paire de couches successives (LYₖ, LYₖ₊₁),
une génération par un outil informatique (ORD), d'un code exécutable (CX) destiné à être exécuté par l'unité de traitement pour mettre en œuvre le réseau de neurones, et
une élaboration par l'outil informatique (ORD) d'au moins une fonction de transfert entre ladite au moins une paire de couches sous la forme d'un ensemble de valeurs pré-calculées (TF).

2. Procédé selon la revendication 1, dans lequel ladite au moins une fonction de transfert est destinée lors de la mise en œuvre du réseau de neurones, à recevoir de la première couche (LYₖ) de ladite paire, des données de sortie quantifiées (DSₖ), à faire intervenir ledit au moins un opérateur (OPₖ) et à délivrer à la deuxième couche (LYₖ₊₁) de ladite paire des données d'entrée quantifiées (DEₖ₊₁), et
ladite élaboration de ladite au moins une fonction de transfert comporte
- pour chaque valeur possible quantifiée desdites données de sortie, une application d'une première fonction de quantification inverse (Q⁻¹ₖ) permettant de transformer la valeur quantifiée en une valeur en virgule flottante, une application dudit au moins un opérateur (OPₖ) sur ladite valeur en virgule flottante de façon à obtenir une valeur intermédiaire en virgule flottante, et une application d'une deuxième fonction de quantification (Qₖ₊₁) sur ladite valeur intermédiaire de façon à délivrer la valeur correspondante quantifiée de la donnée d'entrée, et
- une élaboration d'une table de correspondance (TF) formant ledit ensemble de valeurs et contenant pour toutes les valeurs possibles des données de sortie quantifiées, toutes les valeurs possibles correspondantes des données d'entrées quantifiées.

3. Procédé selon la revendication 1 ou 2, dans lequel ledit au moins un opérateur (OPₖ) est un opérateur point à point.

4. Procédé selon l'une des revendications précédentes, dans lequel le réseau de neurones comporte au moins un opérateur intervenant entre P paires de couches successives, et l'élaboration des P fonctions de transferts respectives entre les P paires de couches comprend une élaboration d'au plus P ensembles de valeurs (TFt).

5. Procédé selon l'une des revendications précédentes, comprenant une phase d'entrainement (PHT) du réseau de neurones, et dans lequel l'élaboration de ladite au moins une fonction de transfert est effectuée pendant ou après la phase d'entraînement.

6. Procédé selon l'une des revendications précédentes, dans lequel l'outil informatique (ORD) comprend un microprocesseur ou un microcontrôleur.

7. Procédé de mise en œuvre d'un réseau de neurones par une unité de traitement, le réseau de neurones comportant une succession de couches et au moins un opérateur intervenant entre au moins une paire de couches successives, le procédé comprenant
- un stockage (13) dans des moyens de mémoire (MM), d'un code exécutable permettant la mise en œuvre du réseau de neurones et d'un ensemble de valeurs représentatives d'au moins une fonction de transfert entre ladite au moins une paire de couches, et
- une exécution (14) du code exécutable par ladite unité de traitement, cette exécution comportant, pour la détermination de ladite fonction de transfert, une extraction des valeurs dudit ensemble de valeurs stockées correspondant aux valeurs des données de sortie quantifiées de la première couche de ladite au moins une paire de couches, lesdites valeurs extraites étant les données d'entrée quantifiées de la deuxième couche de ladite paire.

8. Procédé selon la revendication 7, dans lequel ledit ensemble de valeurs est stocké sous la forme d'une table de correspondance (TF) représentative de ladite au moins une fonction de transfert entre ladite au moins une paire de couches et destinée lors de la mise en œuvre du réseau de neurones, à recevoir de la première couche de ladite paire les données de sortie quantifiées, à faire intervenir ledit au moins un opérateur et à délivrer à la deuxième couche de ladite paire les données d'entrée quantifiées, ladite au moins une table de correspondance contenant pour toutes les valeurs possibles des données de sortie quantifiées, toutes les valeurs possibles correspondantes des données d'entrées quantifiées.

9. Procédé selon la revendication 7 ou 8, dans lequel ledit au moins un opérateur (OPₖ) est un opérateur point à point.

10. Procédé selon l'une des revendications 7 à 9, dans lequel le réseau de neurones comporte au moins un opérateur intervenant entre P paires de couches successives, et on stocke dans les moyens de mémoire au plus P ensembles de valeurs (TFt) représentatifs des P fonctions de transfert entre les P paires de couches.

11. Outil informatique, comprenant des moyens de génération (GEN)configurés pour, préalablement à une mise en œuvre d'un réseau de neurones par une unité de traitement, le réseau de neurones comportant une successions de couches et au moins un opérateur intervenant entre au moins une paire de couches successives, générer un code exécutable (CX) destiné à être exécuté par l'unité de traitement pour mettre en œuvre le réseau de neurones, et élaborer au moins une fonction de transfert entre ladite au moins une paire de couches sous la forme d'un ensemble de valeurs pré-calculées (TF).

12. Outil informatique selon la revendication 11, dans lequel ladite au moins une fonction de transfert étant destinée lors de la mise en œuvre du réseau de neurones, à recevoir de la première couche de ladite paire des données de sortie quantifiées, à faire intervenir ledit au moins un opérateur et à délivrer à la deuxième couche de ladite paire des données d'entrée quantifiées,
les moyens de génération (GEN) sont configurés pour, aux fins de l'élaboration de ladite au moins une fonction de transfert,
pour chaque valeur possible quantifiée desdites données de sortie, appliquer une première fonction de quantification inverse permettant de transformer la valeur quantifiée en une valeur en virgule flottante, appliquer ledit au moins un opérateur sur ladite valeur en virgule flottante de façon à obtenir une valeur intermédiaire en virgule flottante, et appliquer une deuxième fonction de quantification sur ladite valeur intermédiaire de façon à délivrer la valeur correspondante quantifiée de la donnée d'entrée, et
élaborer une table de correspondance contenant pour toutes les valeurs possibles des données de sortie quantifiées, toutes les valeurs possibles correspondantes des données d'entrées quantifiées.

13. Outil informatique selon la revendication 11 ou 12, dans lequel ledit au moins un opérateur (OPk) est un opérateur point à point.

14. Outil informatique selon l'une des revendications 11 à 13, dans lequel le réseau de neurones comporte au moins un opérateur intervenant entre P paires de couches successives, et les moyens de génération (GEN) sont configurés pour élaborer les P fonctions de transferts respectives entre les P paires de couches en élaborant au plus P ensembles de valeurs.

15. Outil informatique selon l'une des revendications 11 à 14, configuré pour effectuer une phase d'entrainement du réseau de neurones, et dans lequel les moyens de génération (GEN) sont configurés pour élaborer ladite au moins une fonction de transfert pendant ou après la phase d'entraînement.

16. Outil informatique selon l'une des revendications 11 à 15, comprenant un microprocesseur ou un microcontrôleur incorporant les moyens de génération (GEN).

17. Outil informatique, configuré pour mettre en œuvre le procédé selon l'une des revendications 1 à 6.

18. Appareil, comportant
une unité de traitement (UT) configurée pour mettre en œuvre un réseau de neurones numérique, le réseau de neurones comportant une successions de couches et au moins un opérateur intervenant entre au moins une paire de couches successives,
des moyens de mémoire (MM) configurés pour stocker un code exécutable permettant la mise en œuvre du réseau de neurones et au moins un ensemble de valeurs représentatives d'au moins une fonction de transfert entre ladite au moins une paire de couches, l'unité de traitement étant configurée pour exécuter le code exécutable, cette exécution comportant, pour la détermination de ladite au moins une fonction de transfert, une extraction des valeurs dudit au moins un ensemble de valeurs stockées correspondant aux valeurs des données de sortie quantifiées de la première couche de ladite au moins une paire de couches, lesdites valeurs extraites étant les données d'entrée quantifiées de la deuxième couche de ladite paire.

19. Appareil selon la revendication 18, dans lequel ledit ensemble de valeurs est stocké sous la forme d'au moins une table de correspondance (TF) représentative de ladite au moins une fonction de transfert entre ladite au moins une paire de couches et destinée lors de la mise en œuvre du réseau de neurones, à recevoir de la première couche de ladite paire les données de sortie quantifiées, à faire intervenir ledit au moins un opérateur et à délivrer à la deuxième couche de ladite paire les données d'entrée quantifiées, ladite au moins une table de correspondance contenant pour toutes les valeurs possibles des données de sortie quantifiées, toutes les valeurs possibles correspondantes des données d'entrées quantifiées.

20. Appareil selon la revendication 18 ou 19, dans lequel ledit au moins un opérateur (OPₖ) est un opérateur point à point.

21. Appareil selon l'une des revendications 18 à 20, dans lequel le réseau de neurones comporte au moins un opérateur intervenant entre P paires de couches successives, et les moyens de mémoire (MM) sont configurés pour stocker au plus P ensembles de valeurs représentatives des P fonctions de transfert entre les P paires de couches.

22. Appareil selon l'une des revendications 18 à 21, dans lequel l'unité de traitement (UT) comprend un microprocesseur.

23. Appareil selon l'une des revendications 18 à 21, dans lequel l'unité de traitement (UT) comprend un accélérateur matériel.

24. Appareil, configuré pour mettre en œuvre le procédé selon l'une des revendications 7 à 10.
